# EUROPEAN PATENT APPLICATION

(11) **EP 1 653 161 A2**
(43) Date of publication of application: **03.05.2006**
(21) Application number: 05256503.3
(22) Date of filing: 20.10.2005
(51) Int. Cl.: F24F 11/00

(54) **Communication system of a multi-type air-conditioner and method thereof**

(30) Priority: 29.10.2004 KR 2004087486
(71) Applicant: LG Electronics Inc., Yongdungpo-gu Seoul (KR)
(72) Inventor: Kim, Sung-Hwan, Seoul (KR); Kim, Kwang-Woon, Gwanak-Gu Seoul (KR); Chung, Baik-Young, Yongjong-Dong, Gyeyang-Gu Incheon (KP); Chang, Se-Dong, Gyeonggi-Do (KR)
(74) Representative: Camp, Ronald

(57) **Abstract**

A communication system of a multi-type air-conditioner and its method are disclosed. The communication system includes a main outdoor unit for wirelessly transmitting/receiving data to/from a plurality of slave outdoor units; an outdoor relay unit for communicating with the main outdoor unit through a fixed line serial communication method; an indoor relay unit for communicating with the outdoor relay unit through a local area communication network or a fixed line; and a plurality of indoor units for wirelessly communicating with the indoor relay unit.

## Description

The present invention relates to a multi-type air-conditioner, it more particularly, relates to a communication system of the multi-type air-conditioner and its method.

An air-conditioner is an equipment for controlling a temperature, humidity, an air stream and purity of indoor air to provide an agreeable indoor environment. According to the construction of units of the air-conditioner, types of air-conditioners can be divided into an integrated air-conditioner which includes both an indoor unit and an outdoor unit in a single case, and a separation-type air-conditioner whose condenser as an outdoor unit and an evaporator as an indoor unit are separately installed in a different space.

The separation type air-conditioner includes an air-cooling and heating air-conditioner which can selectively perform an air-cooling function and a heating function by switching a fluid path of a refrigerant by using a fluid path switching valve.

Recently, a multi-type air-conditioner having a plurality of indoor units allowing air cooling or heating in each indoor space has been increasingly used. As for the multi-type air-conditioner, a plurality of outdoor units each having a plurality of compressors are connected in parallel in order to suitably cope with an operation load of indoor units.

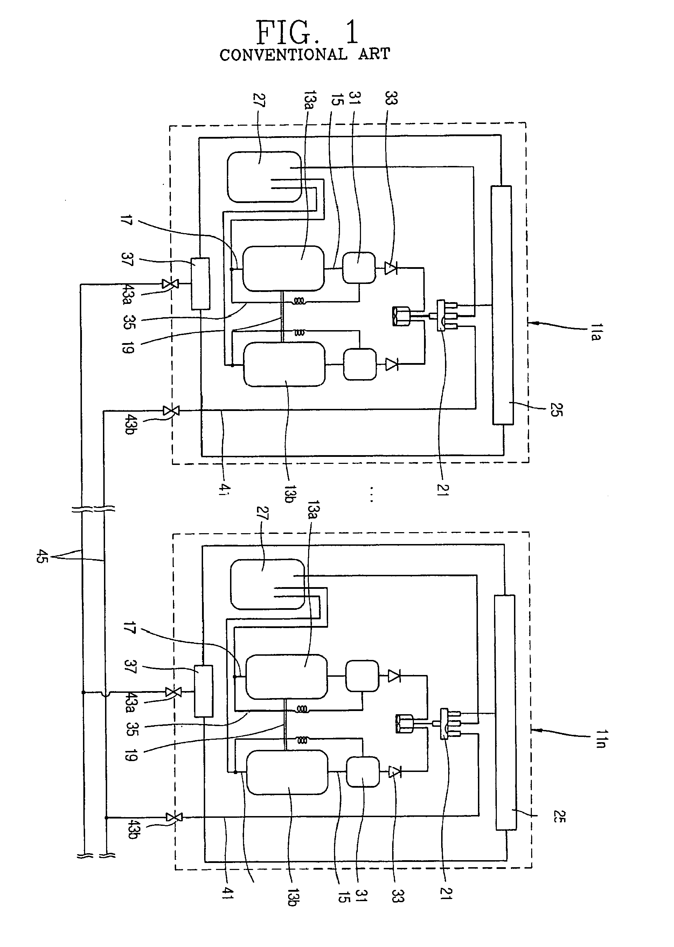

Figure 1 shows the construction of an outdoor unit of the multi-type air-conditioner in accordance with a prior art.

As shown in Figure 1, the prior art multi-type air-conditioner includes first to nth outdoor units 11 a-11 n and a plurality of indoor units (not shown).

The plurality of outdoor units 11a~11n include a pair of first and second compressors 13a and 13b, a four-way valve 21 for switching a fluid path of refrigerant, an outdoor heat exchanger 25 for exchanging heat of the refrigerant, and an accumulator 27 for providing gaseous refrigerant to the first and second compressors 13a and 13b.

A discharge pipe 15 for discharging the refrigerant is provided at an upper portion of the first and second compressors 13a and 13b, and a suction pipe 17 for sucking the refrigerant is coupled at each lower portion of the first and second compressors 13a and 13b. One side of the suction pipe 17 is connected with an accumulator 27. An oil balancing pipe 19 for supplying oil evenly to the first and second compressors 13a and 13b is connected to communicate with the first and second compressors 13a and 13b therebetween.

An oil separator 31 and a check valve 33 are provided at the discharging side of the first and second compressors 13a and 13b, and an oil returning path 35 for returning the separated oil to the first and second compressors 13a and 13b is formed at the suction side of the first and second compressors 13a and 13b.

A four-way valve 21 for switching the fluid path of the refrigerant is provided at a lower side of the check valve 33 , and an outdoor heat exchange 25 is connected with a first port of the four-way valve 21. The accumulator 27 is connected with a second port of the four-way valve 21, and one end of a connection pipe 41 connected with an indoor unit is connected a third port of the four-way valve 21.

A receiver 37 is provided at one side of the outdoor heat exchanger 25 along a direction of a flow of the refrigerant, and service valves 43a and 43b are provided at one side of the receiver 37 and at one side of the connection pipe 41. One side of the service valves 43a and 43b is connected with a main refrigerant pipe 45 connecting the outdoor units 11a-11n, respectively.

The conventional multi-type air-conditioner is constructed such that multiple outdoor units (first to the Nth slave outdoor units and a main outdoor unit) and multiple indoor units (first to the Mth indoor units) are connected by a fixed line.

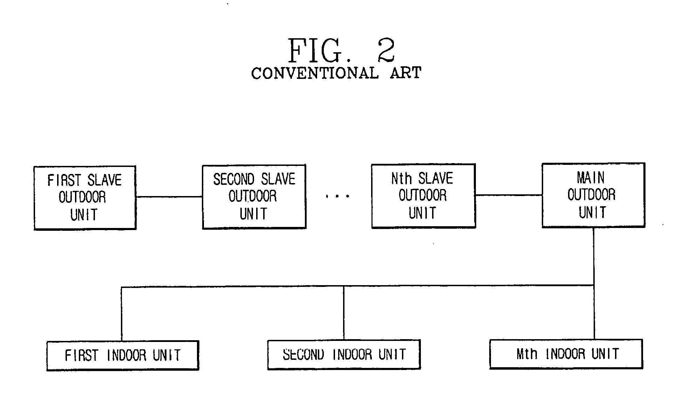

Figure 2 is a schematic diagram showing a state that multiple outdoor units (first to Nth slave outdoor units and the main outdoor unit) and multiple indoor units (first to the Mth indoor units) are connected by a fixed line.

As shown in Figure 2, the plurality of outdoor units (the first slave outdoor units to the Nth slave outdoor units and the main outdoor unit) and the plurality of indoor units (the first to the Mth indoor units) are connected by a fixed line to perform wired communication. One of the plurality of outdoor units (the first slave outdoor units to the Nth slave outdoor units and the main outdoor unit) operates as a central controller for controlling the plurality of outdoor units and the plurality of indoor units, the outdoor unit operating as the central controller is called the main outdoor unit, and other outdoor units are called slave outdoor units.

The main outdoor unit controls the slave outdoor units (the first to the Nth slave outdoor units) and the plurality of indoor units (the first to the Mth indoor units), as well as itself. The main outdoor unit and the slave outdoor units which are connected by a fixed line communicate with each other through fixed line serial communication, and the main outdoor unit and the plurality of indoor units (the first indoor unit to the Mth indoor unit) also communicate with each other through the fixed line serial communication. Namely, the multi-type air-conditioner employs the fixed line communication system. Herein, the fixed line serial communication used by the plurality of outdoor units (the first slave outdoor units to the Nth slave outdoor unit and the main out door unit) and the plurality of indoor units (the first indoor unit to the Mth indoor unit) is UART (Universal Asynchronous Receiver Transmitter) serial communication and its speed is a maximum 4800 bps.

Accordingly, in the communication system of the prior art multi-type air-conditioner, since the plurality of outdoor units and the plurality of indoor units which are connected with each other by the fixed line transmit and receive data through the fixed line serial communication, when communication lines of the plurality of outdoor units and the plurality of indoor units are installed, the communication lines can be erroneously connected or disconnected, causing a breakdown.

The present invention seeks to provide an improved air-conditioner communication system.

A first aspect of the invention provides a communication system of a multi-type air-conditioner including: a main outdoor unit for wirelessly transmitting/receiving data to/from a plurality of slave outdoor units; an outdoor relay unit for communicating with the main outdoor unit through a fixed line serial communication method; an indoor relay unit for communicating with the outdoor relay unit through a local area communication network or a fixed line; and a plurality of indoor units for wirelessly communicating with the indoor relay unit.

Another aspect of the invention provides a communication method of a multi-type air-conditioner including: wirelessly transmitting/receiving data by a plurality of slave outdoor units and a main outdoor unit; transmitting data of the main outdoor unit to an outdoor relay unit through fixed line serial communication; receiving, by the outdoor relay unit, the transmitted data and transmitting the received data to an indoor relay unit through a local area communication network or a fixed line; and wirelessly transmitting by the indoor relay unit the data which has been received through the local area communication network or fixed line to a plurality of indoor units.

A further aspect of the invention provides a communication method of a multi-type air-conditioner including: wirelessly transmitting data by a plurality of indoor units; wirelessly receiving the data by an indoor relay unit; transmitting, by the indoor relay unit, the received data to an outdoor relay unit through a local area communication network or a fixed line; and transmitting by the outdoor relay unit the received data to a main outdoor unit through a fixed line.

Embodiments of the invention will now be described by way of non-limiting example only, with reference to the drawings, in which:
Figure 1 is a schematic diagram showing the construction of an outdoor unit of a multi-type air-conditioner in accordance with the prior art;
Figure 2 is a schematic diagram showing the construction of a communication system of the multi-type air-conditioner in Figure 1 in accordance with the prior art;
Figure 3 is a schematic diagram showing the construction of a communication system of a multi-type air-conditioner in accordance with the present invention;
Figure 4 is a flow chart of transmitting data by a main outdoor unit to a plurality of slave outdoor units and a plurality of indoor units in the communication system of the multi-type air-conditioner in accordance with the present invention; and
Figure 5 is a flow chart of receiving data by the main outdoor unit from the plurality of indoor units in the multi-type air-conditioner in accordance with the present invention.

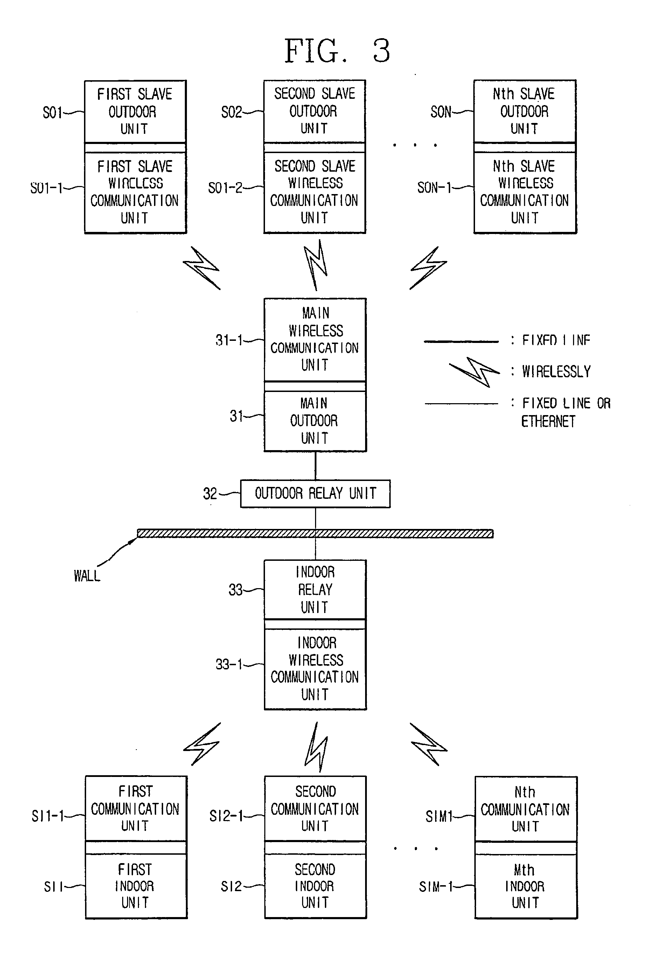

Figure 3 is a schematic diagram showing the construction of a communication system of a multi-type air-conditioner in accordance with the present invention.

As shown in Figure 3, the communication system of the multi-type air-conditioner includes: a plurality of slave outdoor units; a main outdoor unit for wirelessly transmitting/receiving data to/from the plurality of slave outdoor units; an outdoor relay unit for communicating with the main outdoor unit through a fixed line serial communication method; an indoor relay unit for communicating with the outdoor relay unit through a local area communication network or a fixed line; and a plurality of indoor units for wirelessly communicating with the indoor relay unit.

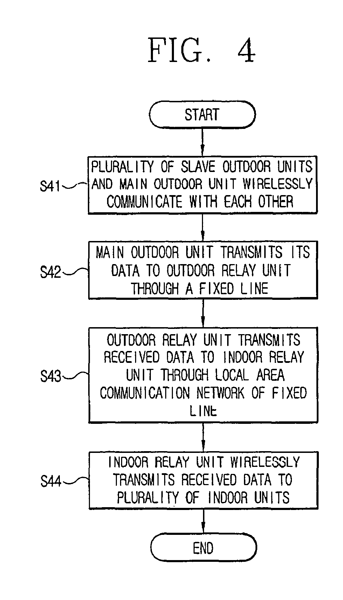

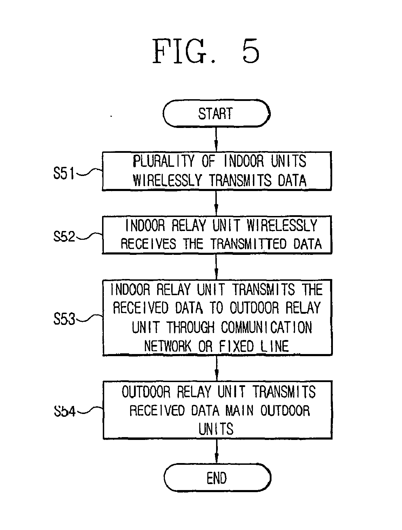

The operation of the communication system of the multi-type air-conditioner in accordance with the present invention will now be described with reference to Figures 4 and 5.

The operation of the communication system of the multi-type air-conditioner can be divided into a method for transmitting data (e.g., a control command) by the main outdoor unit to the plurality of slave outdoor units and the plurality of indoor units and a method for receiving data (e.g., a temperature outside a room, an indoor temperature, or the like) by the main outdoor unit from the plurality of slave outdoor units and the plurality of the indoor units.

First, the method for transmitting data by the main outdoor unit to the plurality of slave outdoor units and the plurality of indoor units in the communication system of the multi-type air-conditioner will now be described with reference to Figure 4.

As shown in Figure 4, in the communication system of the multi-type air-conditioner, the process of transmitting data by the main outdoor unit to the plurality of indoor unit includes wirelessly transmitting/receiving data by the plurality of slave outdoor units and the main outdoor unit therebetween (step S41); transmitting data of the main outdoor unit to the outdoor relay unit through the fixed line serial communication (step S42); receiving the data by the outdoor unit and transmitting the received data to the indoor relay unit through the local area communication network or the fixed line (step S43); and transmitting by the indoor relay unit the data which has been received through the local area communication network or the fixed line to the plurality of indoor units (step S44).

The method of transmitting data by the main outdoor unit to the plurality of slave outdoor units and the plurality indoor units will be described in detail as follows.

The plurality of slave outdoor units, namely, the first to the Nth slave outdoor units (SO1, SO2, ..., SON) transmit data (e.g., a temperature outside a room) as a data formed used in wireless communication to the main outdoor unit 31 through their own wireless communication units, namely, the first slave wireless communication unit, the second slave wireless communication unit, ..., the Nth slave wireless communication unit (SO1-1, S02-1, ..., SON-1), respectively, and the main outdoor unit 31 wirelessly transmits data (e.g., a control command) in a wireless communication data form to the plurality of slave outdoor units (SO1, S02, ..., SON) through its wireless communication unit, namely, a main wireless communication unit 31-1 (step S41). In this case, communication between the plurality of slave outdoor units (SO1, S02, ..., SON) and the main outdoor unit 31 is performed through the wireless communication units. Thus, as mentioned above, the plurality of slave outdoor units (SO1, S02, ..., SON) and the main outdoor unit 31 include the wireless communication unit, respectively.

The main outdoor unit 31 transmits its data (e.g., a command used for controlling the plurality of indoor units) to the outdoor relay unit 32 through fixed line serial communication (step S42).

Upon receiving the data, the outdoor relay unit 32 converts the received data into data (referred to hereinafter as 'network data') used in the network, and transmits the converted data (network data) to the indoor relay unit 33 through the local area communication network or the fixed line (step S43). In this case, preferably, the indoor relay unit 33 and the outdoor relay unit 32 are connected through a serial cable and, preferably, the local area communication network is the Ethernet.

The indoor relay unit 33 converts the received network data into wireless communication data and transmits the converted wireless communication data to the plurality of indoor units, namely, the first indoor unit, the second indoor unit..., the Mth indoor unit (SI1, SI2, ..., SIN) through its wireless communication unit (the indoor wireless communication unit) 33-1 (step S44).

The method for receiving data by the main outdoor unit from the plurality of indoor units in the communication system of the multi-type air-conditioner will now be described with reference to Figure 5.

As shown in Figure 5, the process of receiving data by the main outdoor unit from the plurality of indoor units includes wirelessly transmitting data by the plurality of indoor units (step S51); wirelessly receiving the data by the indoor relay unit (step S52); transmitting by the indoor relay unit the received data to the outdoor relay unit through the local area communication network or the fixed line (step S53); and transmitting by the outdoor relay unit the received data to the main outdoor unit through the fixed line (step S54).

The plurality of indoor units, namely, the first to the Nth indoor units (SI1~SIM) wirelessly transmit their data (e.g., a room temperature, a desired temperature of a user, etc.) in a wireless communication data form to the indoor relay unit 33 through their wireless communication units, namely, the first to the Nth wireless communication units (SI-1~SIM-1) (step S51). In this case, communication between the plurality of indoor units (SI1~SIM) and the indoor relay unit 33 through the wireless communication units. Thus, as mentioned above, the plurality of indoor units (SI1~SIM) and the indoor relay unit 33 include the wireless communication unit, respectively.

The indoor relay unit 33 receives the transmitted wireless communication data and converts it into a form of network data (step S52).

And then, the indoor relay unit 33 transmits the converted data (network data) to the outdoor relay unit 32 through the local area communication network or the fixed line (step S53). In this case, preferably, the indoor relay unit 33 and the outdoor relay unit 32 are connected by a serial cable and, preferably, the local area communication network is the ethernet.

The outdoor relay unit 32 converts the received data (network data) into wireless communication data and transmits the converted wireless communication data to the main outdoor unit 31 through the fixed line (step S54).

In the present embodiment, the above-mentioned wireless communication unit is formed as a Bluetooth communication module and converts various data into Bluetooth communication data and transmits it, and receives Bluetooth communication data and converts it into wireless communication data. In another embodiment of the present invention, the wireless communication unit is formed as an RF communication module, and converts various data into RF communication data and transmits it, and receives RF communication data and converts it into wireless communication data.

In the exemplary embodiment described, the main outdoor unit 32 and the plurality of indoor units SI1~SIM) directly communicate with each other wirelessly through the wireless communication units. However, because of an obstacle such as a wall between the main outdoor unit 32 installed outside a building and the plurality of indoor units (SI1~SIM) installed inside the building, there is a difficulty, such as an error of data communication, in directly using the communication module such as the Bluetooth communication module. Thus, in the present embodiment, the relay units such as the outdoor relay unit and the indoor relay unit are used to reduce an error which can be generated during data communication between the main outdoor unit and the plurality of indoor units. In this respect, however, if the local area wireless communication such as Bluetooth communication would overcome the influence of the obstacle such as the wall, the main outdoor unit and the plurality of indoor units could wirelessly communicate with each other without using such relay units.

As so far described, the communication system of the multi-type air-conditioner has such advantage that because the plurality of outdoor units and the plurality of indoor units transmit/receive data through wireless communication, reliability of data communication can be enhanced.

As the present invention may be embodied in several forms without departing from the essential characteristics thereof, it should also be understood that the above-described embodiments are not limited by any of the details of the foregoing description, unless otherwise specified, but rather should be construed broadly within its scope as defined in the appended claims, and therefore all changes and modifications that fall within the scope of the claims, are therefore intended to be embraced therein. For example, wireless communication other than Bluetooth may be employed.

## Claims

1. A communication system of a multi-type air-conditioner comprising:
a main outdoor unit for wirelessly transmitting/receiving data to/from a plurality of slave outdoor units;
an outdoor relay unit for communicating with the main outdoor unit through a fixed line serial communication method;
an indoor relay unit for communicating with the outdoor relay unit through a local area communication network or a fixed line; and
a plurality of indoor units for wirelessly communicating with the indoor relay unit.

2. The system of claim 1, wherein the outdoor relay unit is arranged to transmit/receive network data to/from the indoor relay unit.

3. The system of claim 2, wherein when the outdoor relay unit is arranged to receive data from the main outdoor unit according to the fixed line serial communication method, convert the received data into network data and transmit the converted network data to the indoor relay unit.

4. The system of claim 2, wherein when the outdoor relay unit is arranged to receive network data from the indoor relay unit, convert the received network data into wireless communication data and transmit the converted wireless communication data to the main outdoor unit.

5. The system of claim 2, wherein when the indoor relay unit is arranged to receive network data from the outdoor relay unit, convert the received network data into wireless communication data, and transmit the converted wireless communication data to the plurality of indoor units.

6. The system of claim 2, wherein when the indoor relay unit is arranged to receive wireless communication data from the plurality of indoor units, convert the received wireless communication data into network data and transmit the converted network data to the outdoor relay unit.

7. The system of claim 1, wherein the plurality of slave outdoor units, the main outdoor unit, the indoor relay unit and the plurality of indoor units include a wireless communication unit for wirelessly transmitting/receiving data, respectively.

8. The system of claim 7, wherein the wireless communication unit is a Bluetooth communication module.

9. A communication system of a multi-type air-conditioner comprising:
a plurality of slave outdoor units; and
a main outdoor unit for wirelessly transmitting/receiving data to/from the plurality of slave outdoor units.

10. The system of claim 9, wherein the plurality of slave outdoor units and the main outdoor unit include a wireless communication unit for wirelessly transmitting/receiving data, respectively.

11. A communication system of a multi-type air-conditioner comprising:
a plurality of indoor units; and
an indoor relay unit for wirelessly transmitting control information of a main outdoor unit for controlling the plurality of indoor units to the plurality of indoor units, wirelessly receiving data of the plurality of indoor units, and transmitting the received data to the main outdoor unit.

12. The system of claim 11, wherein the plurality of indoor units include a wireless communication unit for wirelessly receiving the control information and wirelessly transmitting the data, respectively.

13. A communication method of a multi-type air-conditioner comprising:
wirelessly transmitting/receiving data by a plurality of slave outdoor units and a main outdoor unit;
transmitting data of the main outdoor unit to an outdoor relay unit through fixed line serial communication;
receiving, by the outdoor relay unit, the transmitted data and transmitting the received data to an indoor relay unit through a local area communication network or a fixed line; and
wirelessly transmitting by the indoor relay unit the data which has been received through the local area communication network or fixed line to a plurality of indoor units.

14. The method of claim 13, wherein the step of transmitting data to the indoor relay unit comprises:
converting the received data into network data by the indoor relay unit.

15. The method of claim 13, wherein the step of transmitting data to the plurality of indoor units comprises:
converting the transmitted data into wireless communication data by the indoor relay unit.

16. A communication method of a multi-type air-conditioner comprising:
wirelessly transmitting data by a plurality of indoor units;
wirelessly receiving the data by an indoor relay unit;
transmitting, by the indoor relay unit, the received data to an outdoor relay unit through a local area communication network or a fixed line; and
transmitting by the outdoor relay unit the received data to a main outdoor unit through a fixed line.

17. The method of claim 16, wherein the plurality of indoor units and the indoor relay unit include a wireless communication module for wirelessly transmitting/receiving data, respectively.

18. A communication method of a multi-type air-conditioner comprising:
wirelessly receiving data of a plurality of slave outdoor units by a main outdoor unit; and
wirelessly receiving data of the main outdoor unit by the plurality of slave outdoor units.

19. The method of claim 18, wherein the main outdoor unit and the plurality of slave outdoor units include a wireless communication module for wirelessly transmitting/receiving data, respectively.
